# EUROPÄISCHE PATENTSCHRIFT

(11) **EP 1 979 763 B1**
(45) Veröffentlichungstag und Bekanntmachung des Hinweises auf die Patenterteilung: **30.03.2016**
(21) Anmeldenummer: 07700243.4
(22) Anmeldetag: 03.01.2007
(51) Int. Cl.: G01S 15/93, G01S 13/93

(54) **VORRICHTUNG UND VERFAHREN ZUR UNTERSTÜTZUNG EINES EINPARKVORGANGS EINES FAHRZEUGS**
DEVICE AND METHOD FOR ASSISTING A PARKING PROCESS OF A VEHICLE
DISPOSITIF ET PROCÉDÉ D'ASSISTANCE À UNE MANOEUVRE DE STATIONNEMENT D'UN VÉHICULE

(30) Priorität: 25.01.2006 DE 102006003489
(43) Veröffentlichungstag der Anmeldung: 15.10.2008
(73) Patentinhaber: ROBERT BOSCH GMBH, 70442 Stuttgart (DE)
(72) Erfinder: HAEBERLE, Steffen, 74348 Lauffen Am Neckar (DE)
(86) Internationale Anmeldenummer: PCT/EP2007/050040
(87) Internationale Veröffentlichungsnummer: WO 2007/085509

(56) Entgegenhaltungen:
- EP-A1- 1 489 433
- WO-A1-03/070517
- DE-A1- 10 138 001
- FR-A1- 2 822 547

## Beschreibung

### Stand der Technik

Die Erfindung betrifft eine Vorrichtung zur Unterstützung eines Einparkvorgangs eines Fahrzeugs, insbesondere eines Kraftfahrzeugs, in eine Parklücke mit einem einen Bereich seitlich des Fahrzeugs erfassenden, einen Sender und einen ein von dem Sender ausgesandtes und an einem im Bereich der Parklücke angeordneten Objekt reflektiertes Signal empfangenden Empfänger aufweisenden ersten Sensor. Darüber hinaus betrifft die Erfindung ein Verfahren zur Unterstützung eines Einparkvorgangs eines Fahrzeugs, insbesondere eines Kraftfahrzeugs, in eine Parklücke, wobei bei einem Vorbeifahren des Fahrzeugs an der Parklücke von einem ersten Sensor ein Signal ausgesandt und an einem im Bereich der Parklücke angeordneten Objekt reflektiert wird.

Eine vorgenannte Vorrichtung und ein vorgenanntes Verfahren sind aus DE 103 10 214 A1 bekannt. Dieses Dokument beschreibt ein Verfahren zum Erfassen von Umgebungsinformationen und ein Verfahren zum Bestimmen der Lage einer Parklücke, wobei von einer Quelle pulsierende Signale einer bestimmten Frequenz ausgesandt, an einem Gegenstand reflektiert und in einem Empfänger empfangen werden. Eine Quelle und ein Empfänger bilden dabei einen Sensor. An einem Fahrzeug kann eine Mehrzahl von Sensoren vorgesehen sein, die unabhängig voneinander Messungen ausführen. Die Sensoren können so angeordnet sein, dass Beobachtungsbereiche der Sensoren einander überlappen.

Weiterhin offenbart DE 102 45 421 A1 ein System zum Vermessen einer Parklücke für ein Kraftfahrzeug mit einem Entfernungssensor und einem Wegsensor. Der Entfernungssensor kann in einem vorderen Bereich des Kraftfahrzeugs angeordnet sein und einen seitlich begrenzten, spezifisch ausgerichteten Erfassungsbereich aufweisen. Außerdem kann der Entfernungssensor Bestandteil eines im Kraftfahrzeug vorhandenen Einparkhilfesystems sein.

Bekannt aus DE 298 04 296 U1 ist eine elektronische Personenkraftwagen-Parkhilfe, die ein Einparken neben einem Bordstein erleichtern und vor einer Berührung eines Rades mit dem Bordstein warnen soll. Dabei sind vor einem Vorderrad ein Sensor, der leicht in Vorwärtsfahrtrichtung und schräg nach unten geneigt ist, und ein Sensor, der sich an ungefähr der gleichen Position befindet und der fast senkrecht auf eine Straße gerichtet ist, vorgesehen.

Ferner ist aus DE 101 46 712 A1 eine Einparkhilfsvorrichtung für Kraftfahrzeuge bekannt, wobei eine benachbarte, vorzugsweise in einem gemeinsamen Gehäuse an einem vorderen Eckpunkt des Kraftfahrzeugs sitzende Anordnung zweier Abstandssensoren, die zwei Sendesignale unterschiedlicher Strahlengeometrie liefern und zusammen eine Kreuzkeule erzeugen, vorgesehen sein kann. Eine Vermeidung gegenseitiger Beeinflussung beider Sensoren soll durch Wahl unterschiedlicher Betriebsfrequenzen, alternierender Betriebsart oder geeigneter Modulationsverfahren gewährleistet werden.

Aus der EP 1 489 433 A1 ist ein Verfahren zur Objektabtastung für Kraftfahrzeuge mit wenigstens drei Sensoren zur Abstandsermittlung bekannt, wobei jeder Sensor ein Sendesignal aussendet und ein vom Objekt reflektiertes Reflexionssignal empfängt. Lediglich ein Sensor ist zum Aussenden des Sendesignals vorgesehen, wobei anschließend alle weiteren Sensoren zum Empfangen von Reflexionssignalen auf Basis des einen Sendesignals zum Empfangen angesteuert werden.

Aus der WO 03/ 070517 A1 ist ein Verfahren zum Einparken eines Fahrzeugs bekannt. Dabei werden Abstände des Fahrzeugs zu Hindernissen über eine Vielzahl von Sensoren ermittelt und mit zumindest einem Teil der Sensoren die Länge und/oder die Breite einer Parklücke bestimmt. Bei einem anschließenden Einparken in die Parklücke werden die Abstände zu Begrenzungen der Parklücke von den Sensoren gemessen und bei einem Unterschreiten eines vorgegebenen Abstands zu einem Hindernis wird ein Warnsignal an den Fahrer ausgegeben.

Aus der DE 101 38 001 A1 ist eine Echosignalüberwachungsvorrichtung mit einer Mehrzahl von Sende- und Empfangseinheiten zum Aussenden von Signalen und Empfangen der von einem externen Gegenstand zurückgeworfenen Echos und einer Auswertungseinheit zum Abschätzen der Entfernung von der Überwachungsvorrichtung zu dem externen Objekt anhand der empfangenen Echos bekannt. Die Vorrichtung weist einen Betriebszustand zum Berechnen der relativen Position der Sende- und Empfangseinheiten zueinander anhand der zurückgeworfenen Echos auf.

Der Erfindung liegt die Aufgabe zugrunde, eine Vorrichtung der eingangs genannten Art zu schaffen, die eine Unterstützung des Einparkvorgangs mit erhöhter Genauigkeit ermöglicht. Darüber hinaus liegt der Erfindung die Aufgabe zugrunde, ein Verfahren der eingangs genannten Art anzugeben, das eine präzisere Unterstützung des Einparkvorgangs bietet.

Die erstgenannte Aufgabe wird erfindungsgemäß gelöst mit einer Vorrichtung der eingangs genannten Art, bei der ein zweiter das von dem Sender des ersten Sensors ausgesandte und an dem Objekt reflektierte Signal mittels eines Empfängers empfangender Sensor vorgesehen ist.

Die oben zweitgenannte Aufgabe wird erfindungsgemäß gelöst mit einem Verfahren der eingangs genannten Art, wobei das reflektierte Signal von dem ersten Sensor und von einem zweiten, in einem Horchbetrieb befindlichen Sensor empfangen wird.

### Vorteile der Erfindung

Von besonderem Vorteil ist bei der Erfindung, dass ein zweiter Sensor, der keinen Sender aufzuweisen braucht und lediglich im Horchbetrieb zu betreiben sein muss, zur Erkennung und insbesondere auch zur Vermessung der Parklücke, die auch eine zum Einparken des Fahrzeugs tatsächlich ungeeignete, nur potentielle Parklücke sein kann, in Zusammenarbeit mit dem ersten Sensor, und zwar im Speziellen mit dem Sender des ersten Sensors, hinzugezogen wird. Der zweite Sensor kann dadurch sehr einfach und kostengünstig im Aufbau sein, und/oder es kann für den zweiten Sensor vorteilhaft auf einen Sensor zurückgegriffen werden, der gegebenenfalls bereits als Bestandteil einer Vorrichtung zur Unterstützung eines Einparkvorgangs des Fahrzeugs, insbesondere einer Einparkhilfeeinrichtung, vorhanden ist. Vorzugsweise umfasst die erfindungsgemäße Vorrichtung zumindest eine Parklückenvermessungseinrichtung und/oder einen Tote-Winkel-Erkennungsassistenten (Side-View-Assistenten). Grundsätzlich ist die Erfindung für beliebige Fahrzeuge geeignet; jedoch ist es von besonderem Vorteil, wenn das Fahrzeug ein Kraftfahrzeug ist. Dabei hilft die Erfindung beispielsweise vorteilhaft, bereits geparkte, im Bereich der - zumindest potentiellen - Parklücke befindliche Fahrzeuge, die sich mit einer Fahrzeugecke in etwa auf derselben Höhe wie zum Beispiel eine Bordsteinkante oder andere Störquellen befinden, von der Bordsteinkante und den anderen Störquellen einschließlich möglicher Bodenreflexionen zuverlässig zu unterscheiden. Mit der Erfindung können Hindernisgeometrien verbessert unterschieden und eingegrenzt werden. Vorzugsweise sendet der erfindungsgemäß zusätzlich eingesetzte zweite Sensor nicht aktiv, sondern befindet sich lediglich im Horchbetrieb. Damit ist es insbesondere nicht erforderlich, eine Zykluszeit des sendenden, ersten Sensors zu erhöhen, und es tritt keine Verschlechterung der Messgenauigkeit ein.

Man könnte sich beispielsweise vorstellen, dass in Abhängigkeit des von dem zweiten Sensor empfangenen reflektierten Signals unmittelbar von dem zweiten Sensor ein Signal zum Beispiel zur Ansteuerung einer Anzeige in einer Armaturentafel des Fahrzeugs ausgegeben wird, wodurch ein Fahrer des Fahrzeugs Hinweise für den weiteren Einparkvorgang erhält. Von besonderem Vorteil ist es aber, wenn eine mit dem ersten Sensor und mit dem zweiten Sensor elektrisch verbundene Auswerteeinheit zur Auswertung des mittels des ersten Sensors empfangenen reflektierten Signals und des mittels des zweiten Sensors empfangenen reflektierten Signals vorgesehen ist. Mit der Auswerteeinheit kann vorteilhaft eine Beurteilung und Bewertung einer Objektdetektion des ersten Sensors und des zweiten Sensors vorgenommen werden. Insbesondere können mittels der Auswerteeinheit die beiden empfangenen Signale miteinander und mit dem von dem ersten Sensor ausgesandten, ursprünglichen Signal verglichen werden.

Erfindungsgemäß kann eine einfache Objektunterscheidung und eine Aussage bezüglich des das von dem ersten Sensor ausgesandte Signal reflektierenden Objekts auf einfache Weise erfolgen, wenn der erste Sensor und der zweite Sensor eine unterschiedliche Detektionsempfindlichkeit aufweisen. Vorzugsweise ist die Detektionsempfindlichkeit des zweiten Sensors geringer, das heißt der zweite Sensor weist eine höhere Schaltschwelle auf als der erste Sensor.

Gemäß einer anderen vorteilhaften Weiterbildung der Erfindung ist die Detektionsempfindlichkeit des zweiten Sensors und/oder die Detektionsempfindlichkeit des ersten Sensors einstellbar. Damit kann zum Beispiel die Objektunterscheidung gemäß Vorstellungen und Wünschen eines Fahrers des Fahrzeugs variiert werden. Es ist zum Beispiel denkbar, dass eine Einstellung der Detektionsempfindlichkeit bei einer Konfiguration der erfindungsgemäßen Vorrichtung bezüglich eines bestimmten Fahrzeugtyps vorgenommen wird. Auch vorstellbar ist beispielsweise, dass der Fahrer des Fahrzeugs manuell eine Einstellung zum Beispiel mittels eines Bedienelementes vornimmt oder dass eine Einstellung automatisch durch die erfindungsgemäße Vorrichtung und situationsbezogen, abhängig zum Beispiel von einem vorangehenden Fahrtverlauf des Fahrzeugs, erfolgt.

Vorzugsweise können der erste Sensor und der zweite Sensor mit einem Abstand zueinander angeordnet sein, wodurch eine weiter differenzierte Bewertung des reflektierenden Objekts infolge einer Signallaufwegdifferenz zwischen erstem Sensor und Objekt sowie zweitem Sensor und Objekt ermöglicht ist.

Besonders kostengünstig und einfach im Aufbau kann die erfindungsgemäße Vorrichtung gehalten werden, wenn der erste Sensor und der zweite Sensor abstandsmessende Sensoren sind.

Vorzugsweise ist zumindest der erste Sensor ein nach dem Puls-Echo-Verfahren arbeitender Sensor, wodurch eine besonders hohe Betriebssicherheit und Dauerhaltbarkeit der erfindungsgemäßen Vorrichtung erreicht werden kann. Bevorzugt sind sowohl der erste Sensor als auch der zweite Sensor nach dem Puls-Echo-Verfahren arbeitende Sensoren, insbesondere Ultraschallsensoren; alternativ können die Sensoren beispielsweise auch Radarsensoren oder optische Sensoren sein.

Es ist denkbar, den ersten Sensor und den zweiten Sensor zum Beispiel an einer Längsseite des Fahrzeugs anzuordnen. Hingegen ist es für eine hohe Qualität von mit der erfindungsgemäßen Vorrichtung gewonnenen Messergebnissen von besonderem Vorteil, wenn der erste Sensor an einer Längsseite des Fahrzeugs im Bereich einer Fahrzeugecke angeordnet ist und wenn der zweite Sensor an einer Querseite des Fahrzeugs im Bereich der Fahrzeugecke angeordnet ist.

Insbesondere für eine freizügige Verwendbarkeit des zweiten Sensors ist es vorteilhaft, wenn der zweite Sensor einen Sender aufweist. Somit kann der zweite Sensor an einem Fahrzeug zum Beispiel sowohl für eine Parklückenvermessungseinrichtung als auch für eine Einparkhilfeeinrichtung eingesetzt werden.

Gemäß einer vorteilhaften Weiterbildung des erfindungsgemäßen Verfahrens werden das von dem ersten Sensor empfangene Signal und das von dem zweiten Sensor empfangene Signal in einer Auswerteeinheit miteinander verglichen; vorzugsweise wird zu dem Vergleich auch das von dem ersten Sensor ausgesandte Signal mit hinzugezogen. Vorteilhaft kann mittels des Vergleichs der Signale von der Auswerteeinheit eine Aussage über die Art des das Signal reflektierenden Objekts gemacht werden, zum Beispiel kann der Vergleich eine Angabe darüber ermöglichen, ob es sich bei dem Objekt um einen Bordstein oder ein höheres Hindernis wie ein parkendes Fahrzeug oder einen Pfosten handelt. Insbesondere kann die Auswerteeinheit auch den Fall berücksichtigen, dass von dem zweiten Sensor kein an dem Objekt reflektiertes Signal empfangen wird.

Für eine weiter verbesserte Unterstützung des Einparkvorgangs ist es besonders vorteilhaft, wenn bei einem von dem ersten Sensor empfangenen, an dem Objekt reflektierten Signal und gleichzeitig einem von dem zweiten Sensor empfangenen, an dem Objekt reflektierten Signal das Objekt als ein ein Einparken des Fahrzeugs in die Parklücke unmöglich machendes Sperrhindernis angesehen wird. Damit erfolgt eine Beurteilung des Objektes, die vorzugsweise von der Auswerteeinheit vorgenommen wird, anhand der Frage, ob ein Signal von dem zweiten Sensor empfangen wird, sofern ein von dem ersten Sensor empfangenes, an dem Objekt reflektiertes Signal vorliegt. Empfängt der zweite Sensor kein Signal, so kann das Objekt zum Beispiel ein niedriger Bordstein sein; ein Einparken in die Parklücke ist möglich. Hingegen ist ein Einparken des Fahrzeugs in die Parklücke unmöglich, wenn der zweite Sensor ein Signal empfängt. In diesem Fall ist das Objekt ein Sperrhindernis, zum Beispiel ein Pfosten oder ein bereits abgestelltes anderes Fahrzeug, das die Parklücke für ein Einparken des einzuparkenden Fahrzeugs ungeeignet macht und sperrt. Der Einparkvorgang kann dann vorteilhaft abgebrochen werden. Mithin wird gemäß einem ersten Fall, in dem lediglich der erste Sensor ein Signal empfängt, zwar erkannt, dass im Bereich der Parklücke ein Objekt vorliegt, welches jedoch keine Beschränkung der Parklücke bedeutet, wohingegen gemäß einem zweiten Fall, in dem sowohl der erste als auch der zweite Sensor ein Signal empfängt, von einem die Parklücke sperrenden Hindernis ausgegangen wird. Bei einem von dem ersten Sensor empfangenen, an dem Objekt reflektierten Signal und keinem von dem zweiten Sensor empfangenen Signal wird somit das Objekt als ein ein Einparken des Fahrzeugs in die Parklücke nicht hindernder Gegenstand angesehen.

### Zeichnung

Ein Ausführungsbeispiel der Erfindung ist in der Zeichnung schematisiert dargestellt und wird nachfolgend näher beschrieben, wobei sich jeweils entsprechende Elemente in allen Figuren mit gleichen Bezugszeichen versehen sind. Es zeigen
- Figur 1: ein Fahrzeug mit einer Vorrichtung zur Unterstützung eines Einparkvorgangs,
- Figur 2: eine erste Einparksituation des Fahrzeugs nach Figur 1 und
- Figur 3: eine zweite Einparksituation des Fahrzeugs nach Figur 1.

### Beschreibung des Ausführungsbeispiels

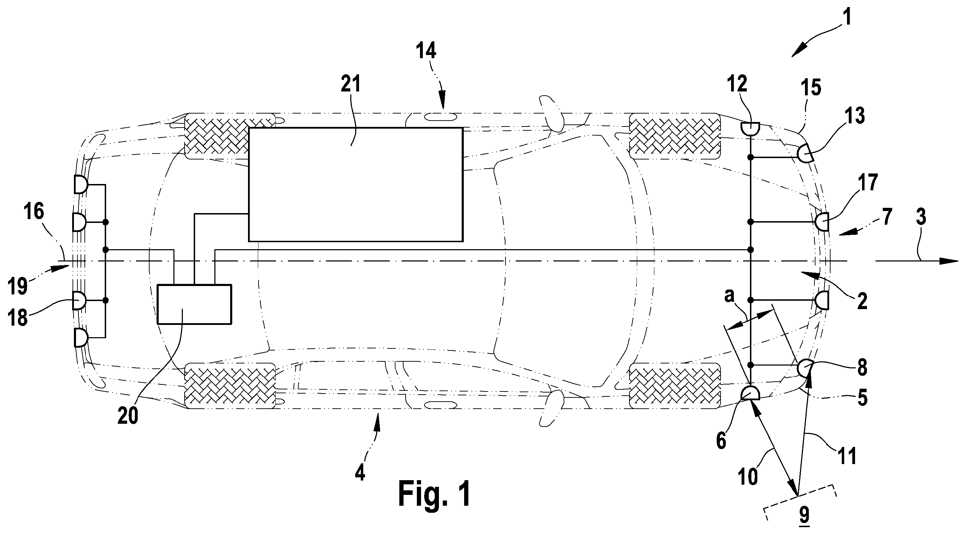

In Figur 1 ist ein als Kraftfahrzeug, und zwar hier als Personenkraftwagen, ausgebildetes Fahrzeug 1 mit einer Vorrichtung 2 zur Unterstützung eines Einparkvorgangs des Fahrzeugs 1 in eine hier nicht dargestellte Parklücke gezeigt. An einer in einer durch einen Pfeil 3 symbolisierten Vorwärtsfahrtrichtung des Fahrzeugs 1 rechten Längsseite 4 des Fahrzeugs 1 ist im Bereich einer rechten vorderen Fahrzeugecke 5 ein erster Sensor 6 angeordnet.

Der erste Sensor 6 erfasst einen Bereich seitlich des Fahrzeugs 1, und zwar seitlich der rechten Längsseite 4 des Fahrzeugs 1. An einer vorderen Querseite 7 des Fahrzeugs 1 ist im Bereich der rechten vorderen Fahrzeugecke 5 ein zweiter Sensor 8 angeordnet. Der erste Sensor 6 weist einen Sender und einen ein von dem Sender ausgesandtes und an einem im Bereich der Parklücke angeordneten Objekt 9 reflektiertes Signal empfangenden Empfänger auf. Mittels eines Empfängers empfängt auch der zweite Sensor 8 das von dem Sender des ersten Sensors 6 ausgesandte und an dem Objekt 9 reflektierte Signal. Ein Doppelpfeil 10 zeigt einen Laufweg des von dem ersten Sensor 6 ausgesandten, an dem Objekt 9 reflektierten und von dem ersten Sensor 6 wieder empfangenen Signals an, und ein Einfachpfeil 11 zeigt einen Laufweg des nach der Reflektion an dem Objekt 9 von dem zweiten Sensor 8 empfangenen Signals an.

Eine der aus dem ersten Sensor 6 und dem zweiten Sensor 8 bestehenden Sensorpaarung an der in Vorwärtsfahrtrichtung rechten Seite des Fahrzeugs 1 entsprechende Sensorpaarung an der linken Seite des Fahrzeugs 1 wird von einem dritten Sensor 12 und einem vierten Sensor 13 gebildet. Der dritte Sensor 12 ist an einer linken Längsseite 14 des Fahrzeugs 1 im Bereich einer linken vorderen Fahrzeugecke 15 angeordnet, und der vierte Sensor 13 ist an der vorderen Querseite 7 des Fahrzeugs 1 im Bereich der linken vorderen Fahrzeugecke 15 angeordnet. Der erste Sensor 6 und der zweite Sensor 8 sowie der dritte Sensor 12 und der vierte Sensor 13 bilden bezüglich der Fahrzeuglängsachse 16 eine spiegelbildliche Anordnung. Der erste Sensor 6 und der dritte Sensor 12 sind nach dem Puls-Echo-Verfahren arbeitende Sensoren.

Die Vorrichtung 2 zur Unterstützung eines Einparkvorgangs des Fahrzeugs 1 weist eine den ersten Sensor 6 und den dritten Sensor 12 aufweisende Parklückenvermessungseinrichtung sowie eine Einparkhilfeeinrichtung auf; die Einparkhilfeeinrichtung weist den ersten Sensor 6, den zweiten Sensor 8, den dritten Sensor 12, den vierten Sensor 13 und zwei weitere, an der vorderen Querseite 7 des Fahrzeugs 1 angeordnete Sensoren 17 sowie vier Sensoren 18 an der hinteren Querseite 19 des Fahrzeugs 1 auf. Somit werden der erste Sensor 6 und der dritte Sensor 12, die bezüglich der Fahrzeuglängsachse 16 nach außen gerichtet sind, sowohl von der Parklückenvermessungseinrichtung als auch von der Einparkhilfeeinrichtung genutzt. Und außerdem nutzt die Parklückenvermessungseinrichtung auch den zweiten Sensor 8 und den vierten Sensor 13, wobei diese Sensoren 8, 13 bei Nutzung für die Parklückenvermessungseinrichtung nur im Horchbetrieb, das heißt ausschließlich im Empfangsbetrieb, betrieben werden. Zum Einsatz in der Einparkhilfeeinrichtung weisen der zweite Sensor 8 und der vierte Sensor 13 zusätzlich zu dem jeweiligen Empfänger jeweils auch einen Sender auf.

Eine als zentrales elektronisches Steuergerät ausgebildete Auswerteeinheit 20 ist elektrisch unter anderem mit dem ersten Sensor 6 und dem zweiten Sensor 8, welche Sensoren 6, 8 eine unterschiedliche Detektionsempfindlichkeit, die jeweils auch einstellbar sein kann, aufweisen, verbunden. Die Detektionsempfindlichkeit des zweiten Sensors 8 ist geringer als die Detektionsempfindlichkeit des ersten Sensors 6.

Es ist weiterhin zu erkennen, dass der erste Sensor 6 und der zweite Sensor 8 mit einem Abstand a, der beispielsweise in einer Größenordnung von 0,10 bis 0,15 m liegen kann, zueinander angeordnet sind. Die Auswerteeinheit 20 ist nicht nur mit sämtlichen Sensoren 6, 8, 12, 13, 17, 18 von Parklückenvermessungseinrichtung und Einparkhilfeeinrichtung elektrisch verbunden, sondern auch mit weiteren, durch einen Rahmen 21 symbolisierten Elementen der Fahrzeugumgebung wie zum Beispiel einer Mensch-Maschine-Schnittstelle zu einem Fahrer und weiteren Fahrzeugsensoren; insbesondere kann die Auswerteeinheit 20, beispielsweise über eine Bus-Leitung wie einen CAN-Bus, auch Informationen über eine Fahrzeuggeschwindigkeit, über eine Umgebungstemperatur oder über eine Anzahl von Radimpulsen erhalten.

Nicht nur der erste Sensor 6 und der zweite Sensor 8 sind abstandsmessende Sensoren, und zwar bevorzugt Ultraschallsensoren, sondern auch die anderen Sensoren 12, 13, 17, 18 der Parklückenvermessungseinrichtung und der Einparkhilfeeinrichtung. Bei dem Ausführungsbeispiel nach Figur 1 senden der erste Sensor 6 und der dritte Sensor 12 Ultraschall nach dem Echolotsystem aus. Der an einem, eine Hindernisgeometrie bildenden Objekt 9 und/oder an mehreren, Hindernisgeometrien bildenden Objekten reflektierte Ultraschall wird auf der linken Fahrzeugseite mit dem dritten Sensor 12 und dem vierten Sensor 13 und/oder auf der rechten Fahrzeugseite mit dem ersten Sensor 6 und dem zweiten Sensor 8 empfangen und in der Auswerteeinheit 20 weiterverarbeitet. Damit zum Beispiel ein im Bereich der Parklücke parkendes, weiteres Fahrzeug als solches erkannt wird, muss es von einem Direktecho, das heißt der sendende Sensor empfängt, des jeweils sendenden Sensors 6, 12 und von einem Kreuzecho, das heißt ein anderer als der sendende Sensor empfängt, des zugehörigen, in der Nachbarschaft befindlichen und lediglich empfangenden Sensors 8, 13 detektiert werden, wobei ein durch die unterschiedlichen Laufwege des Signals zu den vorstehend erstgenannten Sensoren 6, 12 und den zweitgenannten Sensoren 8, 13 hervorgerufener zeitlicher Versatz von der Auswerteeinheit 20 berücksichtigt wird.

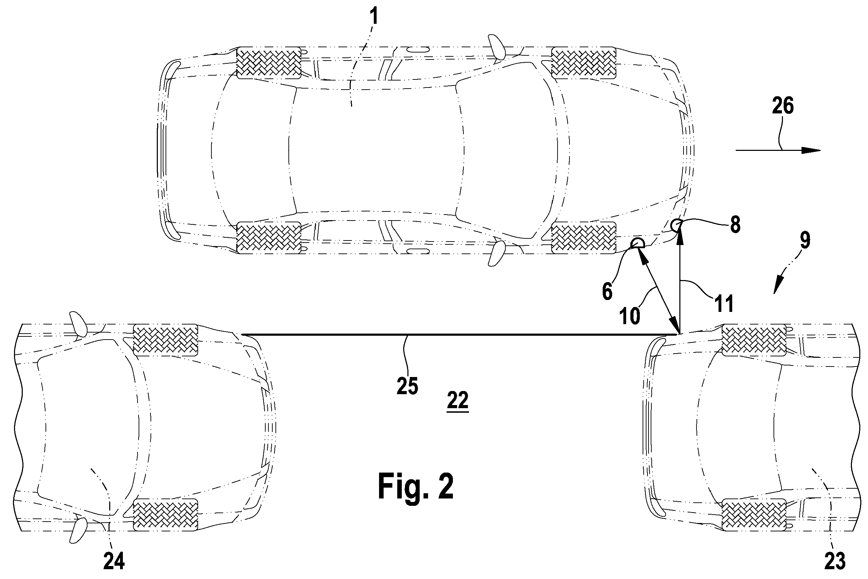

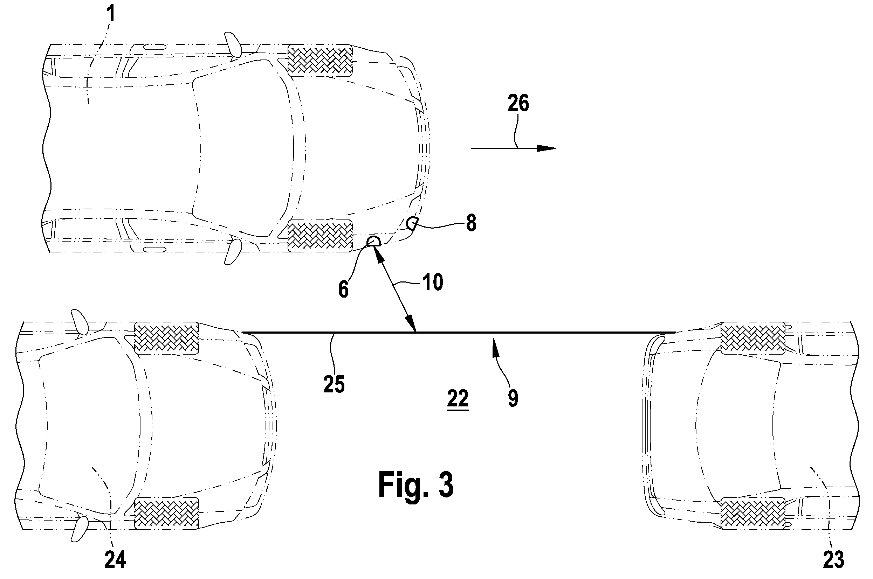

In Figuren 2, 3 ist das Fahrzeug 1 nach Figur 1 jeweils während eines Vorbeifahrens in einer durch einen Pfeil 26 symbolisierten Fahrtrichtung an der Parklücke 22 in unterschiedlichen Einparksituationen gezeigt. Die Parklücke 22 wird an einem vorderen Ende durch ein bereits abgestelltes Fahrzeug 23 und an einem hinteren Ende ebenfalls durch ein bereits abgestelltes Fahrzeug 24 begrenzt. Ein Bordstein 25 bildet eine seitliche, dem einzuparkenden Fahrzeug 1 zugewandte Parklückenbegrenzung.

In der Einparksituation nach Figur 2 detektiert sowohl der erste Sensor 6, verdeutlicht durch einen Doppelpfeil 10, als auch der zweite Sensor 8, verdeutlicht durch einen Einfachpfeil 11, das am vorderen Ende der Parklücke 22 bereits abgestellte Fahrzeug 23 als Objekt 9 im Bereich der Parklücke 22. Da diese beiden Sensoren 6, 8 das Objekt 9 detektieren, wird das Objekt 9 von der Auswerteeinheit 20 (siehe Figur 1) als Hindernis erkannt und bewertet.

Demgegenüber detektiert in der Einparksituation nach Figur 3 lediglich der die höhere Detektionsempfindlichkeit aufweisende erste Sensor 6, verdeutlicht durch einen Doppelpfeil 10, den Bordstein 25 als Objekt 9 im Bereich der Parklücke 22; von dem zweiten Sensor 8 wird das Objekt 9 hingegen nicht detektiert. Tatsächlich stellt der (niedrige) Bordstein 25 kein Hindernis für ein Einparken in die Parklücke 22 dar. Da nur der erste Sensor 6 das Objekt 9 detektiert, wird die Parklücke 22 von der Auswerteeinheit 20 (siehe Figur 1) als Parklücke erkannt.

## Patentansprüche

1. Vorrichtung zur Unterstützung eines Einparkvorgangs eines Fahrzeugs, insbesondere eines Kraftfahrzeugs, in eine Parklücke mit einem einen Bereich seitlich des Fahrzeugs erfassenden, einen Sender und einen ein von dem Sender ausgesandtes und an einem im Bereich der Parklücke angeordneten Objekt reflektiertes Signal empfangenden Empfänger aufweisenden ersten Sensor, wobei ein zweiter das von dem Sender des ersten Sensors (6) ausgesandte und an dem Objekt (9) reflektierte Signal mittels eines Empfängers empfangender Sensor (8) vorgesehen ist, **dadurch gekennzeichnet, dass** der erste Sensor (6) und der zweite Sensor (8) eine unterschiedliche Detektionsempfindlichkeit aufweisen und der zweite Sensor (8) sich nur in einem Horchbetrieb befindet.

2. Vorrichtung nach Anspruch 1, **dadurch gekennzeichnet, dass** eine mit dem ersten Sensor (6) und mit dem zweiten Sensor (8) elektrisch verbundene Auswerteeinheit (20) zur Auswertung des mittels des ersten Sensors (6) empfangenen reflektierten Signals und des mittels des zweiten Sensors (8) empfangenen reflektierten Signals vorgesehen ist.

3. Vorrichtung nach einem der vorhergehenden Ansprüche, **dadurch gekennzeichnet, dass** die Detektionsempfindlichkeit des zweiten Sensors (8) und/oder die Detektionsempfindlichkeit des ersten Sensors (6) einstellbar ist.

4. Vorrichtung nach einem der vorhergehenden Ansprüche, **dadurch gekennzeichnet, dass** der erste Sensor (6) und der zweite Sensor (8) mit einem Abstand (a) zueinander angeordnet sind.

5. Vorrichtung nach einem der vorhergehenden Ansprüche, **dadurch gekennzeichnet, dass** der erste Sensor (6) und der zweite Sensor (8) abstandsmessende Sensoren sind.

6. Vorrichtung nach einem der vorhergehenden Ansprüche, **dadurch gekennzeichnet, dass** zumindest der erste Sensor (6) ein nach dem Puls-Echo-Verfahren arbeitender Sensor ist.

7. Vorrichtung nach einem der vorhergehenden Ansprüche, **dadurch gekennzeichnet, dass** der erste Sensor (6) an einer Längsseite (4) des Fahrzeugs (1) im Bereich einer Fahrzeugecke (5) angeordnet ist und dass der zweite Sensor (8) an einer Querseite (7) des Fahrzeugs (1) im Bereich der Fahrzeugecke (5) angeordnet ist.

8. Vorrichtung nach einem der vorhergehenden Ansprüche, **dadurch gekennzeichnet, dass** der zweite Sensor (8) einen Sender aufweist.

9. Verfahren zur Unterstützung eines Einparkvorgangs eines Fahrzeugs, insbesondere eines Kraftfahrzeugs, in eine Parklücke, wobei bei einem Vorbeifahren des Fahrzeugs an der Parklücke von einem ersten Sensor ein Signal ausgesandt und an einem im Bereich der Parklücke angeordneten Objekt reflektiert wird, wobei das reflektierte Signal von dem ersten Sensor (6) und von einem zweiten Sensor (8) empfangen wird, **dadurch gekennzeichnet, dass** der erste Sensor (6) und der zweite Sensor (8) eine unterschiedliche Detektionsempfindlichkeit aufweisen und der zweite Sensor (8) sich nur in einem Horchbetrieb befindet.

10. Verfahren nach Anspruch 9, **dadurch gekennzeichnet, dass** das von dem ersten Sensor (6) empfangene Signal und das von dem zweiten Sensor (8) empfangene Signal in einer Auswerteeinheit (20) miteinander verglichen werden.

11. Verfahren nach Anspruch 9 oder 10, **dadurch gekennzeichnet, dass** bei einem von dem ersten Sensor (6) empfangenen, an dem Objekt (9) reflektierten Signal und gleichzeitig einem von dem zweiten Sensor (8) empfangenen, an dem Objekt reflektierten Signal das Objekt (9) als ein ein Einparken des Fahrzeugs (1) in die Parklücke (22) unmöglich machendes Sperrhindernis angesehen wird.

## Claims

1. Device for assisting a process of parking a vehicle, in particular a motor vehicle, in a parking space, having a first sensor which senses a region to the side of the vehicle and has a transmitter and a receiver which receives a signal emitted by the transmitter and reflected at an object arranged in the region of the parking space, a second sensor (8) which receives the signal emitted by the transmitter of the first sensor (6) and reflected at the object (9) by means of a receiver being provided, **characterized in that** the first sensor (6) and the second sensor (8) have a different detection sensitivity, and the second sensor (8) is only in a listening mode.

2. Device according to Claim 1, **characterized in that** an evaluation unit (20) which is electrically connected to the first sensor (6) and to the second sensor (8) and is intended to evaluate the reflected signal received by means of the first sensor (6) and the reflected signal received by means of the second sensor (8) is provided.

3. Device according to one of the preceding claims, **characterized in that** the detection sensitivity of the second sensor (8) and/or the detection sensitivity of the first sensor (6) can be adjusted.

4. Device according to one of the preceding claims, **characterized in that** the first sensor (6) and the second sensor (8) are arranged at a distance (a) from one another.

5. Device according to one of the preceding claims, **characterized in that** the first sensor (6) and the second sensor (8) are distance-measuring sensors.

6. Device according to one of the preceding claims, **characterized in that** at least the first sensor (6) is a sensor operating according to the pulse echo method.

7. Device according to one of the preceding claims, **characterized in that** the first sensor (6) is arranged on a longitudinal side (4) of the vehicle (1) in the region of a vehicle corner (5), and **in that** the second sensor (8) is arranged on a transverse side (7) of the vehicle (1) in the region of the vehicle corner (5).

8. Device according to one of the preceding claims, **characterized in that** the second sensor (8) has a transmitter.

9. Method for assisting a process of parking a vehicle, in particular a motor vehicle, in a parking space, a signal being emitted by a first sensor when the vehicle travels past the parking space and being reflected at an object arranged in the region of the parking space, the reflected signal being received by the first sensor (6) and by a second sensor (8), **characterized in that** the first sensor (6) and the second sensor (8) have a different detection sensitivity, and the second sensor (8) is only in a listening mode.

10. Method according to Claim 9, **characterized in that** the signal received by the first sensor (6) and the signal received by the second sensor (8) are compared with one another in an evaluation unit (20).

11. Method according to Claim 9 or 10, **characterized in that**, in the case of a signal reflected at the object (9) and received by the first sensor (6) and, at the same time, a signal reflected at the object and received by the second sensor (8), the object (9) is considered to be a blocking obstacle which makes it impossible to park the vehicle (1) in the parking space (22).

## Revendications

1. Dispositif d'assistance à une manoeuvre de stationnement d'un véhicule, notamment d'un véhicule automobile, dans un emplacement de stationnement comportant un premier capteur détectant une zone latérale du véhicule, comprenant un émetteur et un récepteur recevant un signal émis par l'émetteur et réfléchi par un objet disposé dans la région de l'emplacement de stationnement, dans lequel il est prévu un second capteur (8) recevant le signal émis par le premier capteur (6) et recevant le signal réfléchi par l'objet (9) au moyen d'un récepteur, **caractérisé en ce que** le premier capteur (6) et le second capteur (8) présentent des sensibilités de détection différentes et **en ce que** le second capteur (8) ne fonctionne qu'en mode d'écoute.

2. Dispositif selon la revendication 1, **caractérisé en ce qu'**il est prévu une unité d'évaluation (20) électriquement connectée au premier capteur (6) et au second capteur (8) pour évaluer le signal réfléchi reçu au moyen du premier capteur (6) et le signal réfléchi reçu au moyen du second capteur (8).

3. Dispositif selon l'une quelconque des revendications précédentes, **caractérisé en ce que** la sensibilité de détection du second capteur (8) et/ou la sensibilité de détection du premier capteur (6) est/sont réglable(s).

4. Dispositif selon l'une quelconque des revendications précédentes, **caractérisé en ce que** le premier capteur (6) et le second capteur (8) sont disposés à une certaine distance (a) l'un de l'autre.

5. Dispositif selon l'une quelconque des revendications précédentes, **caractérisé en ce que** le premier capteur (6) et le second capteur (8) sont des capteurs de mesure de distance.

6. Dispositif selon l'une quelconque des revendications précédentes, **caractérisé en ce qu'**au moins le premier capteur (6) est un capteur fonctionnant conformément à un procédé par échos d'impulsions.

7. Dispositif selon l'une quelconque des revendications précédentes, **caractérisé en ce que** le premier capteur (6) est disposé sur un côté longitudinal (4) du véhicule (1) dans la région d'un angle (5) du véhicule et **en ce que** le second capteur (8) est disposé sur un côté transversal (7) du véhicule (1) dans la région de l'angle (5) du véhicule.

8. Dispositif selon l'une quelconque des revendications précédentes, **caractérisé en ce que** le second capteur (8) comprend un émetteur.

9. Procédé d'assistance à une manoeuvre de stationnement d'un véhicule, notamment d'un véhicule à moteur, dans un emplacement de stationnement, dans lequel, lors d'un passage du véhicule devant l'emplacement de stationnement, un signal est émis par un premier capteur et est réfléchi par un objet disposé dans une région de l'emplacement de stationnement, dans lequel le signal réfléchi est reçu par le premier capteur (6) et par un second capteur (8), **caractérisé en ce que** le premier capteur (6) et le second capteur (8) présentent des sensibilités de détection différentes et **en ce que** le second capteur (8) ne fonctionne qu'en écoute.

10. Procédé selon la revendication 9, **caractérisé en ce que** le signal reçu par le premier capteur (6) et le signal reçu par le second capteur (8) sont comparés l'un à l'autre dans une unité d'évaluation (20).

11. Procédé selon la revendication 9 ou 10, **caractérisé en ce que**, lorsqu'un signal est reçu par le premier capteur (6) et est réfléchi par l'objet (9) et **en ce que**, lorsqu'un signal simultanément réfléchi par l'objet est reçu par le second capteur (8), l'objet (9) est considéré comme étant un obstacle rendant impossible un stationnement du véhicule (1) dans l'emplacement de stationnement (22).
